**Europäisches Patentamt**

**European Patent Office**

**Office européen des brevets**

(19)

(11) Veröffentlichungsnummer: **0 123 032**

**A1**

(12) # EUROPÄISCHE PATENTANMELDUNG

(21) Anmeldenummer: **84101419.4**

(22) Anmeldetag: **11.02.84**

(51) Int. Cl.³: **H 01 R 13/639**
**F 16 L 37/12**

(30) Priorität: **28.03.83 DE 3311276**

(43) Veröffentlichungstag der Anmeldung:
**31.10.84 Patentblatt 84/44**

(84) Benannte Vertragsstaaten:
**AT BE CH DE FR GB IT LI LU NL SE**

(71) Anmelder: **Menger, Heinz-Jürgen**
**Am Heiligen Stock 18**
**D-3551 Bad Endbach(DE)**

(72) Erfinder: **Menger, Heinz-Jürgen**
**Am Heiligen Stock 18**
**D-3551 Bad Endbach(DE)**

(74) Vertreter: **Thielmann, Paul, Dipl.-Landw.**
**Am Eschenberg 14**
**D-3560 Biedenkopf(DE)**

(54) **Vorrichtung zur Sicherung einer Kabel- oder Schlauch-Steckverbindung.**

(57) Die Erfindung betrifft eine Vorrichtung zur Sicherung einer aus Kupplung und Stecker bestehenden Kabel- oder Schlauch-Steckverbindung mit einem die Steckverbindung wenigstens teilweise übergreifenden Sicherungselement. Die Vorrichtung besteht im wesentlichen aus einem Widerlager 2, welches den einen Teil der Steckverbindung (Stecker oder Kupplung) hintergreift und dabei das Kabel bzw. den Schlauch umfaßt sowie aus einem mit dem Widerlager verbundenen Halteschieber 3, der den anderen Teil der Steckverbindung (Kupplung bzw. Stecker) hintergreift und dabei das andere Kabel bzw. den Schlauch umfaßt. Der Halteschieber 3 ist gegen das Widerlager 2 in Richtung der Kabel- bzw. Schlauchachse verstellbar und innerhalb einer Verstellspanne in jeder beliebigen Stellung oder in geringen Abständen möglichen Stellungen feststellbar. Zur Fixierung des Halteschiebers 3 in der jeweils gewünschten Stellung zum Widerlager 2 enthält die Vorrichtung ein Rastelement 5, vorzugsweise in Form einer an sich bekannten Sperrklinkeneinrichtung, die mit Rasten am Halteschieber 3 und dem Widerlager 2 zusammenwirkt.

FIG. 1

PATENTINGENIEUR
Dipl.-Landw. P. Thielmann
*European Patent Attorney*

Am Eschenberg 14 · Tel. (06461) 2733
D-3560 BIEDENKOPF/LAHN

84 01 11 - Menger

1

A N M E L D E R
Menger, Heinz-Jürgen, Am Heiligen Stock 18,
D-3551 Bad Endbach-Hartenrod

_____

T I T E L B E Z E I C H N U N G
Vorrichtung zur Sicherung einer Kabel- oder Schlauch-
Steckverbindung

_____

B E S C H R E I B U N G

Die Erfindung betrifft eine Vorrichtung zur Sicherung
einer aus Kupplung und Stecker bestehenden Kabel- oder
Schlauch-Steckverbindung mit einem die Verbindungsteile
wenigstens teilweise übergreifenden Sicherungselement.

Ein oft lästiger Nachteil einer Stromkabelverbindung
durch Kupplung und Stecker ist, daß sich die Verbindung
schon bei geringem Zug, insbesondere bei gleichzeitigen
Bewegungen des Kabels, löst. Es ist bekannt, zur Verhinderung eines ungewollten Lösens des Steckers aus der
Kupplung oder Steckdose diese mit einer den Stecker
übergreifenden Klaue zu versehen. Eine solche Sicherung
macht aber die Kupplung bzw. die Steckdose sehr teuer,
so daß sie außer an Kraftfahrzeugen praktisch kaum zu
finden ist.

2

Zur Verbindung von Schläuchen, insbesondere Gartenschläuchen, sind neuerdings Steckverbindungen aus Kunststoff weit verbreitet, wobei das Steckerteil einen Ringwulst hat, mit dem es im Kupplungsteil durch Rastelemente gehalten wird. Nach einigem Verschleiß und Schrumpfung des Kunststoffes oder durch Verschmutzung kommt es bald dazu, daß sich eine solche Steckverbindung schon bei dem üblichen Wasserdruck löst. Das kann sehr unangenehme und sogar schädliche Folgen haben, wenn das Kupplungsstück nicht mit einer selbstabdichtenden Einrichtung versehen ist.

Der Erfindung liegt daher die Aufgabe zugrunde, eine Vorrichtung zu schaffen, mit der die üblichen aus Kupplung und Stecker bestehenden Steckverbindungen in Stromkabeln und Schläuchen leicht und zuverlässig gegen ungewolltes Lösen gesichert werden können. Die Sicherungsvorrichtung soll billig in der Herstellung, robust im Gebrauch, dauerhaft und insbesondere leicht zu handhaben sein.

Die gestellte Aufgabe wird erfindungsgemäß gelöst durch eine Vorrichtung mit einem den einen Teil der Steckverbindung (Stecker oder Kupplung) hintergreifendes und das Kabel bzw. den Schlauch umfassendes Widerlager sowie einen den anderen Teil der Steckverbindung (Kupplung bzw. Stecker) hintergreifenden und das Kabel bzw. den Schlauch umfassenden, mit dem Widerlager verbundenen Halteschieber, der gegen das Widerlager in Richtung der Kabel- bzw. Schlauchachse verstellbar und innerhalb einer Verstellspanne in jeder beliebigen Stellung oder in geringen Abständen möglichen Stellungen feststellbar ist.

Die Merkmale einer zweckmäßigen und bevorzugten Ausführungsform gehen aus den Ansprüchen 2 bis 5 hervor.

3

Eine alternative Möglichkeit zur Ausbildung des Rastelements am Rastenblock als Sperrklinke, wobei das Widerlager mit einer Rastkerbe und der Halteschieber mit einer Zahnstange versehen ist, ist die Ausbildung des Rastelements als Exzenterklemme, wobei die Einkerbungen am Widerlager und dem Halteschieber überflüssig sind. Die Fixierung mittels Exzenterklemme hat gegenüber der Sperrklinkenrastung den Vorteil, daß der Halteschieber in jeder beliebigen Stellung zum Widerlager feststellbar ist.

Die Erfindung wird im Folgenden anhand einer sie beispielsweise wiedergebenden Zeichnung näher erläutert. Es zeigen:

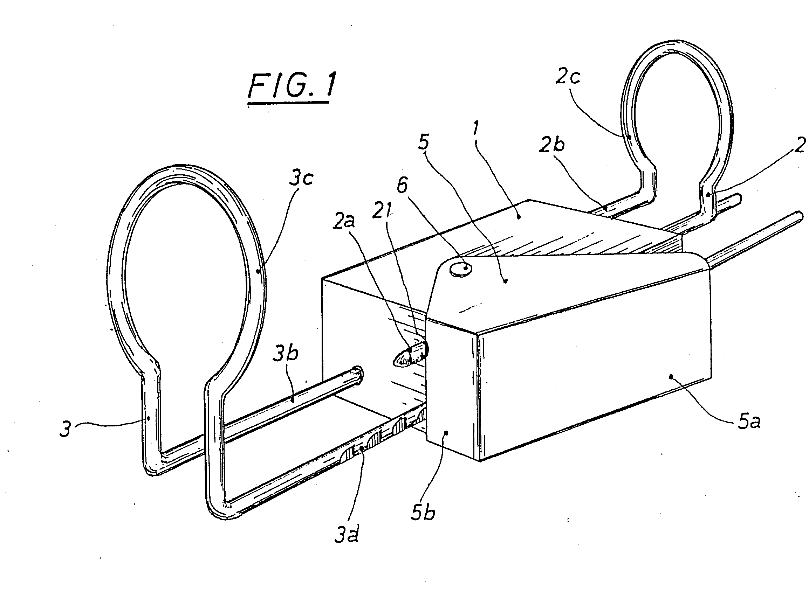

Fig. 1 eine erfindungsgemäße Vorrichtung in perspektivischer Darstellung,

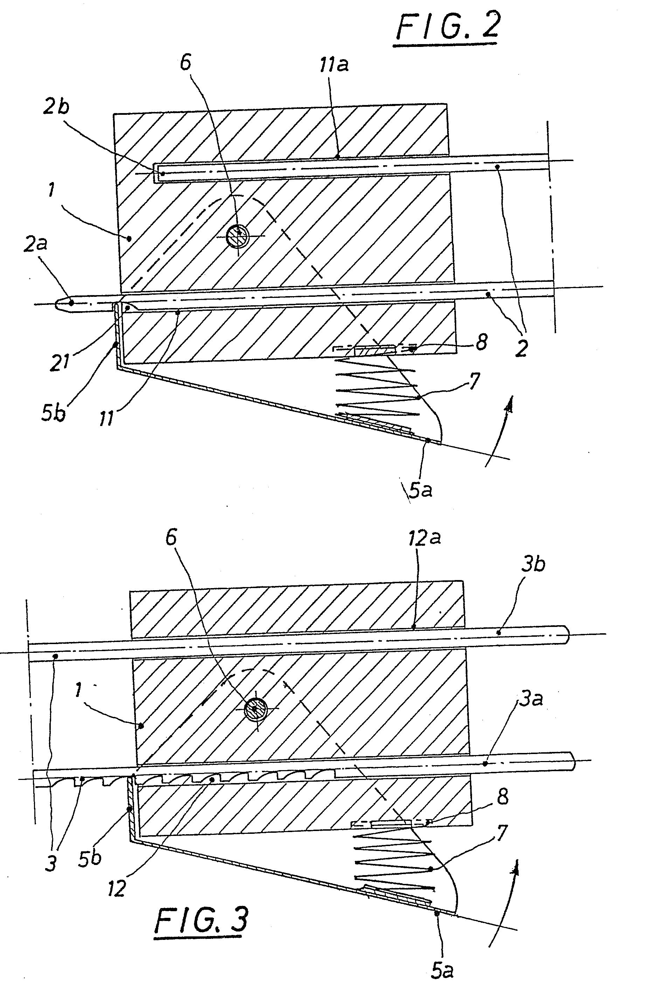

Fig. 2 einen Längsschnitt durch die Ebene des Widerlagers und

Fig. 3 einen Längsschnitt durch die Ebene des Halteschiebers.

Eine bevorzugte Ausführungsform der Erfindung besteht im wesentlichen aus einem Rastenblock 1 in Form eines rechteckigen Prismas, einem Widerlager 2 in Form einer offenen Drahtschleife und einem Haltschieber 3, ebenfalls in Form einer offenen Drahtschleife.

Der Rastenblock 1 weist zwei Paare in seiner Längsrichtung parallel verlaufender Kanäle 11, 11a; 12, 12a auf. Diesen Kanälen ist ein Rastelement in Form einer Sperrklinke 5 zugeordnet, die um eine senkrecht durch die Ebenen der Kanalpaare verlaufende Achse 6 beweglich an dem Rastenblock 1 gelagert ist. Der Betätigungshebel 5a der Sperrklinke 5 steht unter der Wirkung einer Wendeldruckfeder 7, die sich am Rastenblock 1 abstützt und in einer Ausdrehung 8 am Rastenblock 1

4

fixiert ist. Die Rastnase 5b der Sperrklinke 5 greift bei der durch die Feder 7 bewirkten Raststellung in die verlängerten Querschnittslinien von jeweils einem Kanal 11, 12 der beiden Kanalpaare ein. In den Kanälen 11, 11a; 12, 12a des Rastenblockes 1 werden das Widerlager 2 und der Halteschieber 3 mit ihren Schenkeln gehalten.

Die Drahtschleife des Widerlagers 2 hat zwei unterschiedlich lange Schenkel 2a, 2b. Der längere Schenkel 2a weist nahe seinem Ende eine mit der Rastnase 5b zusammenwirkende Rastkerbe 21 auf. Von dem das Widerlager 2 haltenden Kanalpaar 11, 11a ist nur der im Wirkungsbereich der Rastnase 5b liegende Kanal 11 eine durchgehende Bohrung, während der andere Kanal 11a als Sackbohrung ausgebildet ist. Das Widerlager ist in diesem Kanalpaar so angeordnet, daß sich der längere Schenkel 2a in dem durchgehenden Kanal 11 und der kürzere Schenkel 2b sich in dem als Sackbohrung ausgebildeten Kanal 11a befinden. Dadurch erhält das Widerlager 2 einen Anschlag, der das Finden der für das Einrasten der Rastnase 5b in die Rastkerbe 21 richtigen Einstecktiefe erleichtert.

Die Drahtschleife des Halteschiebers 3 hat zwei gleichlange Schenkel, von denen der im Wirkungsbereich der Rastnase 5b geführte Schenkel als Zahnstange 3a ausgebildet ist, während der andere Schenkel 3b nur der verdrehsicheren Führung des Halteschiebers 3 dient.

Der mit einer Rastkerbe 21 versehene Schenkel 2a des Widerlagers 2 und der als Zahnstange 3a ausgebildete Schenkel des Halteschiebers 3 sind jeweils an der der Rastnase 5b zugekehrten Seite an ihren Enden abgeschrägt, so daß sie keilförmig wirkend beim Einschieben die Rastnase 5b anheben, die dann unter Wirkung der

5

Feder 7 in die Rastkerbe 21 und gleichzeitig in die Zahnstange 3a einrastet. Durch die zweiten frei geführten Schenkel 2b, 3b erhalten das Widerlager 2 und der Halteschieber 3 eine verdrehsichere Führung in dem Rastenblock 1.

Sowohl beim Widerlager 2, als auch beim Halteschieber 3 bildet das bogenförmige Mittelteil jeweils eine aus den Ebenen der Schenkelpaare um 90° abgewinkelte, das Kabel bzw. den Schlauch umfassende Öse 2c, 3c. Diese Ösen sind so groß, daß sie zwar auf dem Kabel bzw. dem Schlauch beweglich sind, aber nicht über die Verbindungsteile , (Kupplung und Stecker) gestreift werden können.

Die Benutzung dieser Sicherungsvorrichtung ist einfach: Man drückt den Betätigungshebel 5a der Sperrklinke 5 nieder und zieht das Widerlager 2 und den Halteschieber 3 aus dem Rastenblock 1 heraus, setzt beide Teile zu beiden Seiten der Steckverbindung auf das Kabel bzw. den Schlauch, so daß ihre Schenkel gegeneinander gerichtet sind, steckt die Schenkel des Widerlagers 2 und des Halteschiebers 3 in den Rastenblock und drückt das Widerlager 2 und den Halteschieber 3 so weit wie möglich gegeneinander und läßt die Rastnase 5b einrasten.
Die Sicherungsvorrichtung läßt sich durch Niederdrücken des Betätigungshebels 5a der Sperrklinke 5 leicht wieder lösen.

Die Anwendung der Erfindung ist nicht auf das hier beschriebene Ausführungsbeispiel beschränkt. Hinsichtlich verschiedener weiterer Ausführungsmöglichkeiten wird auf die Ansprüche 6 bis 8 verwiesen.

PATENTINGENIEUR
Dipl.-Landw. P. Thielmann
*European Patent Attorney*

Am Eschenberg 14 · Tel. (06461) 2733
D-3560 BIEDENKOPF/LAHN

0123032

6

81 01 11 - Menger

S C H U T Z A N S P R Ü C H E

1. Vorrichtung zur Sicherung einer aus Kupplung und Stecker bestehenden Kabel- oder Schlauch-Steckverbindung mit einem die Steckverbindung wenigstens teilweise übergreifenden Sicherungselement, g e k e n n z e i c h n e t   d u r c h  ein den einen Teil der Steckverbindung (Stecker oder Kupplung) hintergreifendes und das Kabel bzw. den Schlauch umfassendes Widerlager (2) sowie einen den anderen Teil der Steckverbindung (Kupplung bzw. Stecker) hintergreifenden und das Kabel bzw. den Schlauch umfassenden, mit dem Widerlager (2) verbundenen Halteschieber (3), der gegen das Widerlager (2) in Richtung der Kabel- bzw. Schlauchachse verstellbar und innerhalb einer Verstellspanne in jeder beliebigen Stellung oder in geringen Abständen möglichen Stellungen feststellbar ist.

2. Vorrichtung nach Anspruch 1, g e k e n n z e i c h - n e t   d u r c h

a) einen Rastenblock (1) mit wenigstens zwei parallel verlaufenden Kanälen (11, 12) und wenigstens einem Rastelement (15);

b) ein wenigstens in einem der Kanäle des Rastenblokkes (1) in Längsrichtung beweglich, verdrehsicher und lösbar rastend angeordnetes Widerlager (2);

c) einen in wenigstens einem der Kanäle (12) des
Rastenblockes 1 in Längsrichtung beweglich, verdrehsicher und lösbar rastend angeordneten Halteschieber (3).

3. Vorrichtung nach Anspruch 1 und 2, d a d u r c h
g e k e n n z e i c h n e t , daß sowohl das Widerlager (2), als auch der Halteschieber (3) jeweils
eine um etwa 90° seitlich abgewinkelte, senkrecht
zur Kabel- bzw. Schlauchachse stehende, offene, das
Kabel bzw. den Schlauch umfassende Öse (2c, 3c)
haben.

4. Vorrichtung nach Anspruch 1 bis 3, g e k e n n -
z e i c h n e t   d u r c h   folgende Merkmale:
a) Der Rastenblock (1) weist zwei parallel verlaufende Kanalpaare (11, 11a; 12, 12a) auf, denen
ein gemeinsames Rastelement (5) zugeordnet ist,
welches auf je einen Kanal (11, 12) der beiden
Kanalpaare wirkt, wobei der nicht im Bereich des
Rastelements (5) liegende Kanal (11a) des einen
Kanalpaares als Sackbohrung ausgebildet ist;

b) das Widerlager (2) und der Halteschieber (3)
sind jeweils als eine offene Drahtschleife ausgebildet, deren Bogenteil um 90° aus den Ebenen
der Schleifenschenkel (2a, 2b; 3a, 3b) abgewinkelt ist und eine senkrecht zur Kabel- bzw.
Schlauchachse stehende, das Kabel bzw. den
Schlauch umfassende Öse (2c, 3c) bildet;

c) die beiden Schleifenschenkel (2a, 2b) des Widerlagers (2) haben eine unterschiedliche Länge, wobei der kürzere Schenkel (2b) dem als Sackbohrung ausgebildeten Kanal (11a) und der längere
Schenkel (2a) dem im Bereich des Rastelements (5)

8

liegende Kanal (11) zugeordnet ist;

d) die beiden Schleifenschenkel (3a, 3b) des Halteschiebers (3) sind etwa gleichlang, wobei der eine Schleifenschenkel mit dem Rastelement (5) zusammenwirkt, während der andere Schleifenschenkel (3b) in den zugehörigen Kanal (12b) des Rastenblockes (1) frei in Längsrichtung beweglich ist.

5. Vorrichtung nach Anspruch 1 bis 4, d a d u r c h
g e k e n n z e i c h n e t , daß
a) das Rastelement als eine am Rastenblock (1) um eine senkrecht durch die Ebenen der Kanalpaare (11, 11a; 12, 12a) führende Achse (6) bewegliche Sperrklinke (5) ausgebildet ist, deren Betätigungshebel (5a) durch eine Feder (7) gegen den Rastenblock (1) abgestützt ist;

b) der längere Schenkelhebel (2a) des Widerlagers (2) nahe seinem Ende eine mit der Sperrklinke (5) zusammenwirkende Rastkerbe (21) aufweist;

c) der eine Schenkel des Halteschiebers (3) als mit der Sperrklinke (5) zusammenwirkende Zahnstange (3a) ausgebildet ist.

6. Vorrichtung nach Anspruch 1 bis 4, d a d u r c h
g e k e n n z e i c h n e t , daß das Rastelement als eine auf das Widerlager und den Halteschieber gleichzeitig wirkende Exzenterklemme ausgebildet ist.

9

7. Vorrichtung nach Anspruch 1 und 2, g e k e n n - z e i c h n e t   d u r c h   folgende Merkmale:

   a) Der Rastenblock weist zwei parallel verlaufende durchgehende Kanäle mit profiliertem Querschnitt auf, denen ein gemeinsames Rastelement zugeordnet ist;

   b) das Widerlager und der Halteschieber haben je einen profilierten Schaft, dessen Profilquerschnitt dem Querschnitt der Kanäle im Rastenblock entspricht und die in den Kanälen des Rastenblockes in Längsrichtung beweglich und durch das gemeinsam zugeordnete Rastelement feststellbar sind;

   c) das Widerlager und der Halteschieber haben jeweils am anderen Ende ihres Schaftes eine um 90° seitlich abgewinkelte, senkrecht zur Kabel- bzw. Schlauchachse stehende, offene, das Kabel bzw. den Schlauch umfassende Öse.

8. Vorrichtung nach Anspruch 7, d a d u r c h   g e - k e n n z e i c h n e t , daß der profilierte Schaft des Halteschiebers eine gezahnte Kante hat, während der profilierte Schaft des Widerlagers nahe dem der Öse gegenüberliegenden Ende eine Einkerbung hat, wobei das Rastelement am Rastenblock eine gegen die Wirkung einer Feder lösbare Sperrklinke ist.

*FIG.1*

2/2

0123032

FIG. 2

FIG. 3

**0123032**
Nummer der Anmeldung

Europäisches
Patentamt

**EUROPÄISCHER RECHERCHENBERICHT**

EP 84 10 1419

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| A | US-A-2 406 567 (A.J. SCHUENEMAN) <br> * Spalte 2, Zeile 30 - Spalte 3, Zeile 8; Figuren * | 1 | H 01 R 13/639 <br> F 16 L 37/12 |
| A | US-A-4 221 449 (J.F. SHUGART) <br> * Figuren * | 1 | |
| A | US-A-3 223 958 (R.F. PROHL) <br> * Figuren * | 1 | |
| A | US-A-4 143 934 (H.L. SIEBERT) <br> * Figuren * | 6 | |
| A | GB-A- 24 160 (F.W. SCHROEDER)(A.D. 1910) <br> * Figuren * | 1 | **RECHERCHIERTE SACHGEBIETE (Int. Cl. ³)** <br><br> H 01 R <br> F 16 L |

Der vorliegende Recherchenbericht wurde für alle Patentansprüche erstellt.

| Recherchenort | Abschlußdatum der Recherche | Prüfer |
|---|---|---|
| DEN HAAG | 06-07-1984 | RAMBOER P. |